Europäisches Patentamt

European Patent Office

Office européen des brevets

(19)

(11) **EP 0 619 886 B1**

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(21) Anmeldenummer: 93923454.8

(22) Anmeldetag: **29.10.1993**

(51) Int Cl.[6]: **G01P 15/16**

(86) Internationale Anmeldenummer:
**PCT/DE93/01038**

(87) Internationale Veröffentlichungsnummer:
**WO 94/10577 (11.05.1994 Gazette 1994/11)**

(54) **VERFAHREN ZUR ERMITTLUNG DES DREHZAHLGRADIENTEN DER WELLE EINER BRENNKRAFTMASCHINE**

METHOD FOR DETERMINING ENGINE SPEED GRADIENT

PROCEDE PERMETTANT DE DETERMINER LE GRADIENT DU REGIME D'UN MOTEUR A COMBUSTION INTERNE

(84) Benannte Vertragsstaaten:
**DE FR IT**

(30) Priorität: **04.11.1992 DE 4237194**

(43) Veröffentlichungstag der Anmeldung:
**19.10.1994 Patentblatt 1994/42**

(73) Patentinhaber: **ROBERT BOSCH GMBH**
**70442 Stuttgart (DE)**

(72) Erfinder:
• **DENZ, Helmut**
**D-70176 Stuttgart (DE)**

• **WILD, Ernst**
**D-71739 Oberriexingen (DE)**
• **BOETTCHER, Klaus**
**D-71735 Eberdingen-Hochdorf (DE)**
• **MALLEBREIN, Georg**
**D-70197 Stuttgart (DE)**
• **TISCHER, Christian**
**D-71282 Hemmingen (DE)**

(56) Entgegenhaltungen:
**DE-A- 3 421 640          FR-A- 2 479 474**

## Beschreibung

Stand der Technik

Die Erfindung geht aus von einer Einrichtung nach der Gattung des unabhängigen Anspruchs.

Einrichtungen zur Ermittlung des Drehzahlgradienten dn/dt bzw.ngrad eines Verbrennungsmotors sind bereits bekannt, so ist beispielsweise aus der DE-PS 34 21 640 bekannt, Drehzahlen des Motors aus den Abständen von drehzahlabhängigen Impulspaaren zu berechnen und aus wenigstens zwei so berechneten Drehzahlen einen Drehzahländerungswert, also einen Drehzahlgradienten zu bestimmen.

Die bekannte Einrichtung hat jedoch den Nachteil, daß die Berechnung des Drehzahlgradienten im Steuergerät und die für die Steuerung bzw. Regelung der Brennkraftmaschine erforderlichen Berechnungen gleichzeitig ablaufen und dadurch eine hohe Belastung der Recheneinrichtung des Steuergerätes insbesonders auch während besonders zeitkritischer Phasen verursachen.

Vorteile der Erfindung

Die erfindungsgemäße Einrichtung zur Ermittlung des Drehzahlgradienten dn/dt mit den kennzeichnenden Merkmalen des Hauptanspruchs hat gegenüber der aus dem Stand der Technik bekannten Einrichtung den Vorteil, daß die Rechnerbelastung verringert wird, indem die Auswertung der für die Steuerung und Regelung der Brennkraftmaschine erforderlichen Daten in einer zeitkritischen Phase und die Bestimmung des Drehzahlgradienten dn/dt bzw ngrad in einer zeitunkritischen Phase abläuft.

Diese getrennte Berechnung die möglich ist, da der Drehzahlgradient nicht so öft berechnet werden muß wie andere Parameter wird in vorteilhafter Weise noch daduch verbessert, daß die Berechnung des Drehzahlgradienten dn/dt auf besonders einfache Weise erfolgt und die ohnehin berechnete Drehzahl n sowie die ebenfalls ohnehin ermittelten Segmentzeiten $t_{seg}(i)$ sowie $t_{seg}(i-1)$ bei der Berechnung verwendet werden.

Weitere Vorteile der Erfindung ergeben sich aus den Merkmalen der abhängigen Ansprüche.

Zeichnung

Ein Ausführungsbeispiel der Erfindung ist in der Zeichnung dargestellt und wird in der nachfolgenden Beschreibung näher erläutert. Dabei zeigt Figur 1 eine vom äußeren Aufbau her bereits bekannte und in verschiedenen Kraftfahrzeugen eingesetzte Einrichtung zur Drehzahlerfassung und zur Steuerung einer Brennkraftmaschine, mit der auch die vorliegende Erfindung realisiert werden kann. In Figur 2 ist ein Signalverlauf aufgetragen und in Figur 3 ein Ablaufdiagramm, das die erfindungsgemäße Ermittlung des Drehzahlgradienten dn/dt bzw. ngrad erkennen läßt.

Beschreibung des Ausführungsbeispieles

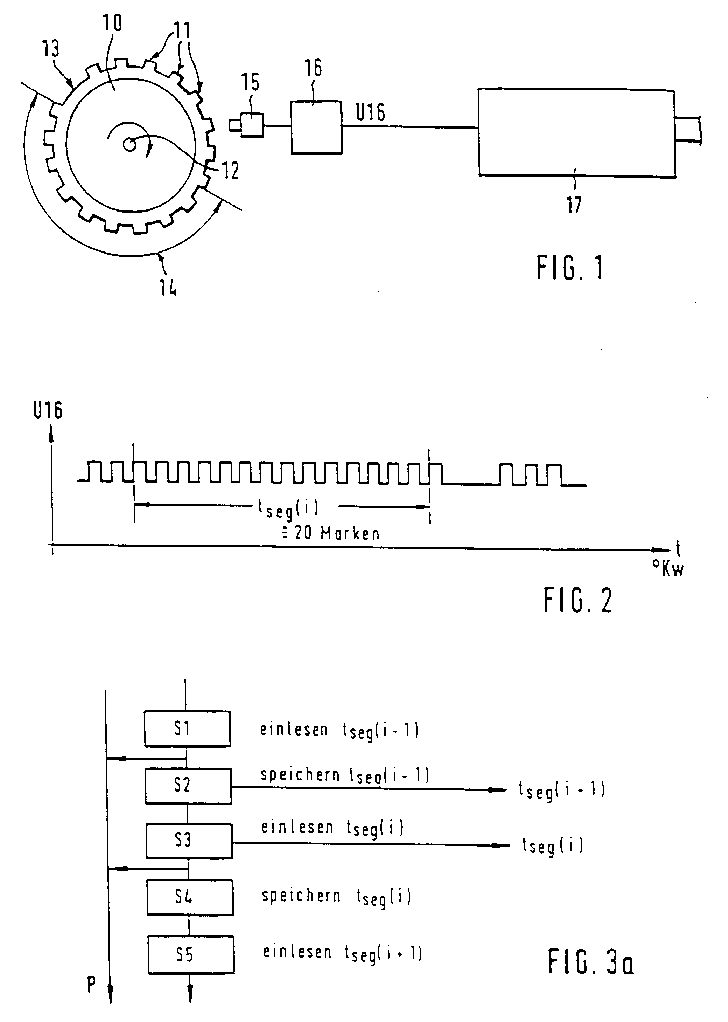

In Figur 1 ist eine Einrichtung, die für die Durchführung des erfindungsgemäßen Verfahrens geeignet ist, aufgezeigt. Dabei ist eine Inkrementscheibe 10, die eine Vielzahl von gleichen Winkelmarken 11, beispielsweise 60-2 an ihrer Oberfläche aufweist, auf einer Welle 12 befestigt, deren Drehzahl bzw. Drehzahländerung bestimmt werden soll. Diese Welle ist beim gewählten Ausführungsbeispiel die Kurbelwelle einer Brennkraftmaschine.

Die Winkelmarken 11 der Inkrementscheibe 10 sind alle in gleichem Abstand voneinander angeordnet, eine Bezugsmarke, die beim dargestellten Ausführungsbeispiel als fehlende Marke ausgebildet ist und auch als Synchronlücke bezeichnet wird, ist mit 13 bezeichnet.

Mit gegebenenfalls angepaßter Ausgestaltung der Inkrementscheibe könnte auch der Drehrahlgradient für eine andere Welle, beispielsweise die Nockenwelle ermittelt werden. Anstelle einer Inkrementscheibe könnte auch eine andere Scheibe mit wenigstens einer Winkelmarke eingesetzt werden

Weiterhin kann eine Segmentscheibe mit einer Winkelmarke pro Zylinder im Zusammenhang mit der Ermittlung des Drehzahlgradienten der Nockenwelle oder entsprechend mit einer Winkelmarke pro Zylinderzahl/2 bei der Kurbelwelle eingesetzt werden.

Bei der bereits erwähnten Inkrementscheibe, die mit der Kurbelwelle einer Brennkraftmaschine verbunden ist, sind bekanntermaßen zur Erzeugung geeigneter Triggermarken bei einer Vier-Zylinderbrennkraftmaschine zwei Segmente 14 erforderlich, bei einer Scheibe mit 60-2 Winkelmarken würde sich damit ein Segment über 30 Marken erstrecken.

Bei einer Sechs-Zylinderbrennkraftmaschine wären entsprechend drei Segmente erforderlich, bei einer Scheibe mit 60-2 Marken würde sich damit ein Segment über 20 Marken erstrecken.

Die Inkrementscheibe 10, die beispielsweise in Pfeilrichtung rotiert, wird von einem Aufnehmer 15, beispielsweise einem Induktivsensor abgetastet, der Aufnehmer liefert drehzahlabhängige Ausgangssignale, die in der Pulsformerstufe 16 zu Rechteckimpulsen geformt werden. Diese werden wiederum in der Recheneinrichtung 17, beispielsweise dem Steuergerät ausgewertet zur Ermittlung von Größen, die für die Steuerung und/oder Regelung der Brennkraftmaschine erforderlich sind. Dabei werden aus bestimmten Pulsabständen Zeitdauern gebildet, bestimmte Winkelmarkenflanken dienen als Triggermarken.

Weiterhin wird aus diesen Rechteckimpulsen bzw. den daraus erhaltenen Zeiten die Drehzahl n und der Drehzahlgradient dn/dt bzw. grad n ermittelt.

Das auszuwertende Rechtecksignal U16 ist in der Figur 2 über der Zeit t aufgetragen. Die für die Bestimmung der mittleren Drehzahl n sowie für die Ermittlung des Drehzahlgradienten dn/dt wesentliche Segmentzeit ist in Figur 2 mit $t_{seg}(i)$ bezeichnet. Die vorhergehende Segmentzeit wäre $t_{seg}(i-1)$. Die Segmentzeit ist dabei die Zeit, die während des Vorbeilaufs eines Segments vor dem Aufnehmer vergeht.

In der Recheneinrichtung 16 laufen zeitkritische Berechnungen und die Berechnung des Drehzahlgradienten dn/dt, die nur zu unkritischen Zeiten durchgeführt wird, ab. Zur Ermittlung einer geeigneten Formel, nach der der Drehzahlgradient berechnet werden kann, sollen die folgenden Überlegungen dienen: Für die Berechnung des Drehzahlgradienten wird sowohl die Segmentzeit $t_{seg}$ als auch die Drehzahl n herangezogen, es gilt dann:

$$(1) \qquad ngrad = dn/dt = \frac{\dfrac{K}{t_{seg}(i)} - \dfrac{K}{t_{seg}(i-1)}}{t_{seg}(i)}$$

$$(2) \qquad ngrad = dn/dt = K \left[ \frac{1}{t_{seg}(i)^2} - \frac{1}{t_{seg}(i) * t_{seg}(i-1)} \right]$$

$$(3) \qquad ngrad = dn/dt = K \frac{t_{seg}(i-1) - t_{seg}(i)}{t_{seg}(i)^2 * t_{seg}(i-1)}$$

Im Nenner dieser Gleichung kann näherungsweise die Segmentzeit $t_{seg}(i-1)$ gleichgesetzt werden mit $t_{seg}(i)$ und damit können beide Segmentzeiten durch die Größe K/n ersetzt werden:

$$(4) \qquad t_{seg}(i-1) = t_{seg}(i) = K/n$$

Die Berechnungsformel vereinfacht sich zu der Form

$$(5) \qquad ngrad = dn/dt = n^3/K^2 * [t_{seg}(i-1) - t_{seg}(i)]$$

Es ergibt sich letztendlich für die Berechnung des Drehzahlgradienten dn/dt eine Gleichung, die abhängig ist von der dritten Potenz der Drehzahl, die durch das Quadrat der Konstanten K dividiert wird und mit der Differenz zweier Segmentzeiten multipliziert wird.

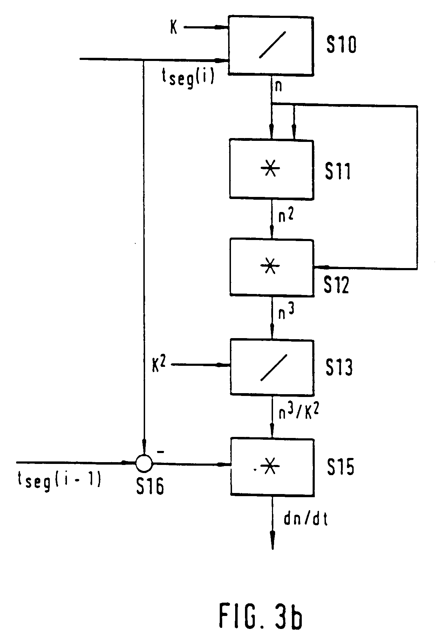

Der Rechenaufwand kann gering gehalten werden, indem das in Figur 3 angegebene Verfahren durchgeführt wird. Dabei wird im zeitkritischen Rechnenraster im Segmenttakt lediglich die alte Segmentzeit zwischengespeichert und anschließend die neue Segmentzeit berechnet. Es liegt somit immer ein gültiges Wertepaar von Segmentzeiten $t_{seg}(i)$ und $t_{seg}(i-1)$ vor, aus dem in einem nichtkritischen Zeitraster die Berechnung des Drehzahlgradienten dn/dt durchgeführt wird.

In Figur 3a sind die einzelnen Schritte aufgezeigt, die im zeitkritischen Rechenraster im Segmenttakt ablaufen, dabei bedeuten:

S1: Einlesen der Segmentzeit $t_{seg}(i-1)$
S2: Speichern der Segmentzeit $t_{seg}(i-1)$
S3: Einlesen der Segmentzeit $t_{seg}(i)$
S4: Speichern der Segmentzeit $t_{seg}(i)$
S5: Einlesen der Segmentzeit $t_{seg}(i+1)$

Diese Schritte wiederholen sich laufend, sobald die entsprechenden Zeiten vorliegen.

Im gleichen Zeitraster, in dem das Einlesen bzw. die Speicherung der verschiedenen Segmentzeiten erfolgt, läuft die Auswertung zur Bestimmung der für die Steuerung und Regelung der Brennkraftmaschine erforderlichen Daten, es läuft dabei das Programm P zur Berechnung dieser Daten ab.

Für die Berechnungen im zeitunkritischen Bereich stehen jeweils zwei Segmentzeiten zur Verfügung, im Beispiel nach Figur 3b die Segmentzeiten $t_{seg}(i-1)$ und $t_{seg}(i)$. Aus jeweils zwei Segmentzeiten sowie einer gespeicherten Konstante K wird der Drehzahlgradient im zeitunkritischen Programm ermittelt, wobei folgende Schritte ablaufen:

Im Schritt S10 wird aus einer abgespeicherten Konstante K und der eingelesenen Segmentzeit $t_{seg}(i)$ die Drehzahl n ermittelt, indem die Konstante K durch die Segmentzeit $t_{seg}(i)$ dividiert wird.

Aus der Drehzahl n wird im Schritt S11 das Quadrat der Drehzahl $n^2$ gebildet. Aus der Drehzahl n sowie dem Quadrat der Drehzahl wird im Schritt S12 die dritte Potenz $n^3$ der Drehzahl berechnet.

Im Schritt S13 wird die dritte Potenz der Drehzahl $n^3$ durch $K^2$ dividiert, wobei $K^2$ entweder abspeicherbar oder aus K berechnet wurde.

Im Schritt S14 wird die Differenz der gespeicherten Segmentzeit $t_{seg}(i-1)$ und der eingelesenen Segmentzeit $t_{seg}(i)$ gebildet. Diese Differenz wird im Schritt S15 mit der Größe $n^3/K^2$ multipliziert, so daß das Ergebnis des Schritts S15 den gewünschten Drehzahlgradienten dn/dt darstellt.

Das in Figur 3b beschriebene Programm kann auch in anderer Reihenfolge ablaufen, wesentlich ist, daß es nur in zeitunkritischen Phasen abläuft und damit die Recheneinrichtung 17 in den zeitkritischen Phasen nicht belastet.

**Patentansprüche**

1. Verfahren zur Ermittlung des Drehzahlgradienten (dn/dt) einer von einer Brennkraftmaschine angetriebenen Welle mit der eine Inkrementscheibe verbunden ist, die an ihrer Oberfläche eine Vielzahl von gleichen Winkelmarken aufweist, wobei eine vorgebbare Anzahl von Winkelmarken ein Segment bilden und die Winkelmarken von einem Geber zur Erzeugung einer drehzahlabhängigen Impulsfolge abgetastet werden, mit einer Recheneinrichtung, in der die zeitlichen Abstände zwischen wählbaren Impulsen oder zwischen gleichartigen Impulsflanken der Impulsfolge ermittelt werden und die zeitlichen Abstände Segmentzeiten entsprechen, wobei jeweils eine Segmentzeit die Zeit ist, in der sich die Kurbelwelle der Brennkraftmaschine um einen Winkel von 360°/z/2 dreht und z die Zylinderzahl der Brennkraftmaschine ist, wobei die Recheneinrichtung laufend in einem zeitkritischen Raster im Segmenttakt abhängig von diesen Zeiten Parameter, die zur Steuerung und/oder Regelung der Brennkraftmaschine erforderlich sind, ermittelt, dadurch gekennzeichnet, daß der Drehzahlgradient (dn/dt) in einem unkritischen Zeitraster ermittelt wird.

2. Verfahren nach Anspruch 1, dadurch gekennzeichnet, daß die Recheneinrichtung das Steuergerät der Brennkraftmaschine ist.

3. Verfahren nach Anspruch 2, dadurch gekennzeichnet, daß der Drehzahlgradient (dn/dt) in Abhängigkeit von der dritten Potenz der Drehzahl (n) und der Differenz zwischen der aktuellen Segmentzeit ($t_{seg}(i)$) sowie einer vorherigen Segmentzeit ($t_{seg}(i-1)$) gebildet wird.

4. Verfahren nach Anspruch 3, dadurch gekennzeichnet, daß die Konstante (K) und/oder die Konstante ($K^2$) in einem nichtflüchtigen Speicher der Recheneinrichtung abgelegt sind.

5. Verfahren nach einem der vorhergehenden Ansprüche, dadurch gekennzeichnet, daß der Drehzahlgradient dn/dt im Steuergerät nach der Formel:

$$ngrad = dn/dt = n^3/K^2 * [t_{seg}(i-1) - t_{seg}(i)]$$

berechnet wird.

**Claims**

1. Method for determining the speed gradient (dn/dt) of a shaft driven by an internal combustion engine and to which there is connected an increment disc which has a multiplicity of identical angle marks on its surface, a prescribable number of angle marks forming a segment and the angle marks being scanned by a sensor to generate a speed-dependent pulse train, having a computer in which the temporal spacings between selectible pulses or between similar pulse edges of the pulse train are determined and the temporal spacings correspond to segment times, a segment time in each case being the time in which the crank shaft of the internal combustion engine rotates by an angle of 360°/z/2, z being the number of cylinders of the internal combustion engine, it being the case that in a time-critical pattern the computer continuously determines with segment timing, as a function of these times, parameters which are required for controlling and/or regulating the internal combustion engine, characterized in that the speed gradient (dn/dt) is determined in a non-critical time pattern.

2. Method according to Claim 1, characterized in that the computer is the control unit of the internal combustion engine.

3. Method according to Claim 2, characterized in that the speed gradient (dn/dt) is formed as a function of the third power of the speed (n) and the difference between the current segment time ($t_{seg}(i)$) and a previous segment time ($t_{seg}(i-1)$).

4. Method according to Claim 3, characterized in that the constant (K) and/or the constant ($K^2$) are stored in a non-volatile memory of the computer.

5. Method according to one of the preceding claims, characterized in that the speed gradient dn/dt is calculated in the control unit in accordance with the formula:

$$ngrad = dn/dt = n^3/k^2 * [t_{seg}(i-1) - t_{seg}(i)].$$

**Revendications**

1. Procédé pour déterminer le gradient de régime (dn/dt) d'un axe entraîné par un moteur à combustion interne relié à une roue phonique dont le bord comporte un grand nombre de repères d'angle, égaux, et un nombre prédéterminé de repères d'angle forme un segment, les repères d'angle étant détectés par un capteur pour générer une suite d'impulsions dépendant de la vitesse de rotation,

comprenant une installation de calcul qui détermine à des intervalles de temps, entre les impulsions choisies, ou entre deux flancs d'impulsions de même nature, la suite d'impulsions et qui correspondent aux intervalles de temps des durées de segment,
et chaque durée de segment est le temps au cours duquel le vilebrequin du moteur à combustion interne tourne d'un angle de 360°/z/2, et (z) est le nombre de cylindres du moteur à combustion interne, l'installation de calcul détermine en continu, suivant une trame critique dans le temps, à la cadence des segments, en fonction de ces durées, les paramètres nécessaires à la commande et/ou à la régulation du moteur à combustion interne,

caractérisé en ce que
le gradient de régime (dn/dt) se détermine dans une trame de temps non critique.

2. Procédé selon la revendication 1,
caractérisé en ce que
l'installation de calcul est l'appareil de commande du moteur à combustion interne.

3. Procédé selon la revendication 2,
caractérisé en ce que
le gradient de régime (dn/dt) est formé en fonction de la puissance trois de la vitesse de rotation et de la différence entre la durée de segment instantanée ($t_{seg}(i)$) et une durée de segment prédéterminée ($t_{seg}(i-1)$).

4. Procédé selon la revendication 3,
caractérisé en ce que
la constante (K) et/ou la constante ($K^2$) sont enregistrées dans une mémoire morte de l'installation de calcul.

5. Procédé selon l'une quelconque des revendications précédentes,

caractérisé en ce que

le gradient de la vitesse de rotation (dn/dt) dans l'appareil de commande se calcule suivant la formule suivante :

$$\text{gradn} = \text{dn} / \text{dt} = n^3 / K^2 * [t_{seg}(i\text{-}1) - t_{seg}(i)]$$

FIG. 1

FIG. 2

FIG. 3a

FIG. 3b